# EUROPÄISCHE PATENTSCHRIFT

(11) **EP 3 097 753 B1**
(45) Veröffentlichungstag und Bekanntmachung des Hinweises auf die Patenterteilung: **19.07.2023**
(21) Anmeldenummer: 16000782.9
(22) Anmeldetag: 06.04.2016
(51) Int. Cl.: A01B 61/04

(54) **SICHERUNGSVORRICHTUNG**
SAFETY DEVICE
DISPOSITIF DE SÉCURISATION

(30) Priorität: 28.05.2015 DE 102015006922
(43) Veröffentlichungstag der Anmeldung: 30.11.2016
(73) Patentinhaber: Hydac Technology GmbH, 66280 Sulzbach (DE)
(72) Erfinder: Weber, Norbert, 66125 Saarbrücken (DE)
(74) Vertreter: Bartels und Partner, Patentanwälte

(56) Entgegenhaltungen:
- DE-A1- 1 525 651
- DE-B3- 10 337 744
- DE-C1- 19 652 615

## Beschreibung

Die Erfindung betrifft eine Sicherungsvorrichtung für mindestens eine bewegbare Komponente gegen Überlast, insbesondere in Form eines Werkzeugs bei Anbau- und Bodenbearbeitungsgeräten, mit den Merkmalen im Oberbegriff von Anspruch 1.

Automatische Überlastsicherungen gehören bei Bodenbearbeitungsgeräten zum Stand der Technik. Solche Sicherungsvorrichtungen dienen der Sicherung von Komponenten, wie Bearbeitungswerkzeugen, beispielsweise Pflugscharen, Zinken von Eggen, Brech- oder Mahlwerkzeugen oder dergleichen, wie auch der Sicherung andersartiger Anbaugeräte von mobilen Einheiten gegen Kräfte, die im Betrieb auf die Komponenten oder Werkzeuge einwirken. Im Stand der Technik ist zur Überlastsicherung üblicherweise ein mechanisches Federelement zwischen Werkzeug und Gerät integriert, das bei Überlast eine Ausgleichsbewegung der Komponente oder des Werkzeugs relativ zum Gerät gegen Federkraft ermöglicht. Bei einfachem Aufbau ist dadurch eine voneinander unabhängige Ausgleichsbewegung von Komponenten, wie Werkzeugen, ermöglicht. Ein wesentlicher Nachteil derartiger Vorrichtungen ist jedoch der große Bauraumbedarf der Federeinheiten, wenn diese ausreichend große Auslösekräfte für die Ausgleichsbewegung der Werkzeuge zur Verfügung stellen sollen. Des Weiteren treten bei großen Federvorspannkräften aufgrund starker Beschleunigungen bei der Rückstellbewegung ausgelenkter Werkzeuge sehr große Belastungen sowohl an den Werkzeugen als auch der Werkzeuglagerung am zugehörigen Geräterahmen auf.

Die DE 1 525 651 beschreibt eine Sicherungsvorrichtung für mindestens eine bewegbare Komponente gegen Überlast, insbesondere in Form eines Werkzeuges bei Anbau- und Bodenbearbeitungsgeräten, wobei zur Erzeugung einer die jeweilige Komponente in der Arbeitsposition positionierenden Haltekraft mindestens ein Druckmittelgetriebe vorhanden ist, bei dem mittels einer Ventileinrichtung ein Druckfluid zwischen zwei voneinander separierten Ausgleichsräumen mit sich ändernden Volumina für eine Ausgleichsbewegung der jeweiligen Komponente aus ihrer Arbeitsposition bei Überlast schnell und für die Rückstellung dieser Komponente in ihre jeweilige Arbeitsposition langsam strömt.

Eine weitere Überlastsicherung geht aus der DE 196 52 615 C1 hervor.

Die DE 103 37 744 B3 zeigt ein Wechselventil auf.

Im Hinblick auf diese Problematik liegt der Erfindung die Aufgabe zugrunde, eine Sicherungsvorrichtung der besagten Art zur Verfügung zu stellen, die sich durch ein verbessertes Betriebsverhalten auszeichnet. Erfindungsgemäß ist diese Aufgabe durch eine Sicherungsvorrichtung gelöst, die die Merkmale des Patentanspruchs 1 in seiner Gesamtheit aufweist. Gemäß dem kennzeichnenden Teil des Anspruchs 1 besteht eine wesentliche Besonderheit der Erfindung darin, dass das Druckmittelgetriebe als Kolbenspeicher ausgebildet ist, der mittels eines an einer Kolbenstange angelenkten Kolbens die beiden Ausgleichsräume voneinander separiert; und dass die Ventileinrichtung mindestens ein Wechselventil im Kolben aufweist, das im Kolbenboden mindestens eine Drosselstelle für das langsame Strömen und einzelne Führungsstege aufweist, die zwischen sich Öffnungsquerschnitte für ein rasches Strömen des Druckfluids freilassen.

Die Druckmittel betätigung der Vorrichtung vermeidet den Nachteil der Sperrigkeit, der bei bekannten Systemen mit Federspannung auftritt, wenn ausreichend große Haltekräfte realisiert werden müssen. Gleichzeitig ermöglicht die Kombination des Druckmittelgetriebes mit einer Ventileinrichtung auf einfache Weise eine Einstellung der Geschwindigkeit der Rückstellbewegungen der Komponenten, wenn diese bei Einwirkung von Überlast eine Ausgleichsbewegung aus der Arbeitsposition ausgeführt haben, weil mittels der Ventileinrichtung für die Rückhubbewegung eine langsame Strömung des Druckfluids zwischen den Ausgleichsräumen vorgebbar ist. Die so bewirkte Dämpfung vermeidet die bei hohen Beschleunigungen in der Rückhubbewegung auftretenden übermäßigen Belastungen an Komponenten und deren Lagerung am Geräterahmen, während gleichzeitig das schnelle Ansprechverhalten bei Überlast erhalten bleibt, weil die Ventileinrichtung ein rasches Strömen des Druckfluids bei den Ausgleichsbewegungen der Komponenten ermöglicht. Bei der schnellen Ausgleichsbewegung des Kolbens ermöglicht die Ventileinrichtung eine im Wesentlichen druckänderungsfreie Bewegung des Druckfluids in der Art eines Pendelvolumens zwischen den Ausgleichsräumen über die Ventileinrichtung. Durch eine dergestalt ungedämpft erfolgende Ausgleichsbewegung ist dadurch ein vorteilhaftes, schnelles Ansprechverhalten bei Überlastzuständen gewährleistet.

Die Ventileinrichtung weist mindestens ein Wechselventil im Kolben auf, das im Ventilboden mindestens eine Drosselstelle für das langsame Strömen und einzelne Führungsstege aufweist, die zwischen sich Öffnungsquerschnitte für ein rasches Strömen des Druckfluids freilassen. Wechselventile dieser Art sind bekannt. Beispielsweise zeigt die DE 103 37 744 B3 ein Wechselventil dieser Art, das für einen Einsatz bei Kolbenspeichern vorgesehen ist.

Die Anordnung kann mit Vorteil so getroffen sein, dass diametral zur Längsachse der Kolbenstange einander gegenüberliegend zwei Wechselventile als Ventileinrichtung im Kolben angeordnet sind. Durch einen dadurch im Öffnungsfall von zwei Wechselventilen zur Verfügung gestellten großen Durchlassquerschnitt ist bei ungedrosselter Strömung eine im Wesentlichen ungedämpfte Ausgleichsbewegung sichergestellt.

Bei vorteilhaften Ausführungsbeispielen ist zumindest einer der Ausgleichsräume mit einem Füll- und Entleeranschluss permanent fluidführend verbunden, der vorzugsweise durch die Kolbenstange hindurchgeführt ist, um dergestalt die Auslösekraft für die Überlastsicherung einzustellen, so dass diese auf einfache Weise bedarfsgerecht dem jeweiligen Einsatzzweck angepasst werden kann.

Bei besonders vorteilhaften Ausführungsbeispielen ist die Anordnung derart getroffen, dass bei einer Bewegung des Kolbens in seine Endlagenstellung sich dieser an einem innerhalb des Speichergehäuses des Kolbenspeichers angeordneten Dämpfungsglied abstützt, das sich wiederum mit seiner gegenüberliegenden Seite an ein Dämpfungsfluid, wie Fett, anlegt. Dadurch ist ein Schutz gegen mechanische Stoßbelastungen des Kolbenspeichers gebildet.

Das Speichergehäuse und die Kolbenstange des Kolbenspeichers können über jeweils eine Anlenkstelle zum einen bewegbar mit dem Anbau- oder Bodenbearbeitungsgerät und zum anderen mit der bewegbaren Komponente, resp. in umgekehrter Anordnung, verbunden sein. Dergestalt lässt sich der jeweilige Kolbenspeicher ohne mechanische Zwischenglieder unmittelbar mit der jeweiligen bewegbaren Komponente koppeln, beispielsweise bei einem Bodenbearbeitungsgerät mit einer Zinke einer Egge oder einer Schare, wobei für eine Vielzahl von bewegbaren, vor Überlast zu sichernden Komponenten jeder Komponente ein Druckmittelgetriebe, wie ein Kolbenspeicher, zugeordnet sein kann.

Nachstehend ist die Erfindung anhand der Zeichnung im Einzelnen erläutert. Es zeigen:
- Fig. 1: eine perspektivische Schrägansicht einer Sicherungsvorrichtung gemäß dem Stand der Technik für ein Werkzeug bei einem Bodenbearbeitungsgerät, das lediglich schematisch vereinfacht angedeutet ist;
- Fig. 2: eine Seitenansicht der Sicherungsvorrichtung des Standes der Technik von Fig. 1;
- Fig. 3: eine der Fig. 2 entsprechende Seitenansicht eines Ausführungsbeispiels der erfindungsgemäßen Sicherungsvorrichtung;
- Fig. 4: einen Längsschnitt eines Kolbenspeichers, der als Druckmittelgetriebe beim Ausführungsbeispiel der erfindungsgemäßen Sicherungsvorrichtung vorgesehen ist;
- Fig. 5: einen stark vergrößert gezeichneten Teilausschnitt des in Fig. 4 mit V, VI bezeichneten Bereichs, wobei die Ventilstellung eines Wechselventils während des Ausfahrens des Kolbens von Fig. 4 gezeigt ist;
- Fig. 6: einen der Fig. 5 entsprechenden Teilausschnitt, wobei die Ventilstellung des Wechselventils beim Einfahren des Kolbens von Fig. 4 gezeigt ist;
- Fig. 7: eine gegenüber Fig. 5 und 6 weiter vergrößert gezeichnete perspektivische Schrägansicht des gesondert dargestellten Ventilkörpers des Wechselventils; und
- Fig. 8: eine schematische Darstellung der Verschaltung mehrerer Kolbenspeicher der erfindungsgemäßen Sicherungsvorrichtung.

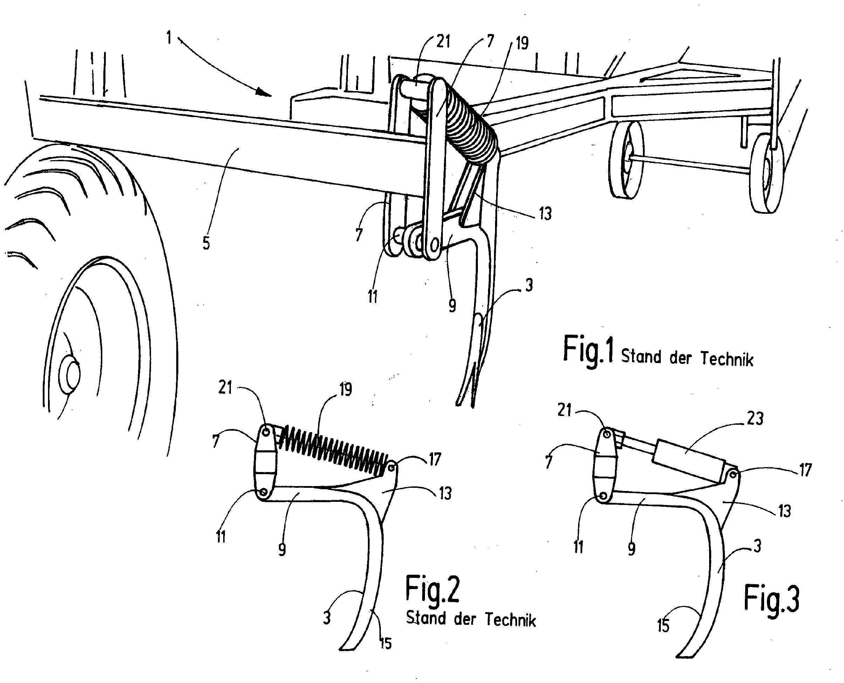

Die Fig. 1 zeigt in stark schematisch vereinfachter und nur teilweiser Darstellung ein Bodenbearbeitungsgerät 1, wobei lediglich eine einzelne Sicherungsvorrichtung gemäß dem Stand der Technik für ein bewegbares Werkzeug in Form einer Eggenzinke 3 dargestellt ist. Die Sicherungsvorrichtung ist, wie mehrere weitere nicht dargestellte Sicherungsvorrichtungen, die für eine Mehrzahl weiterer Zinken 3 in einer Reihe nebeneinanderliegend angeordnet und in der vereinfachten Darstellung von Fig. 1 nicht dargestellt sind, an einer Traverse 5 des Geräterahmens angeordnet. Für eine in Form einer Schwenkbewegung erfolgende Ausgleichsbewegung der jeweiligen Zinken 3 sind diese an einem Paar Lagerwangen 7 gelagert, die mit der Traverse 5 fest verbunden sind und sich von dieser weg nach oben und nach unten im Abstand voneinander parallel erstrecken. Im Bereich des unteren Endes der Lagerwangen 7 ist ein Arm 9 der jeweiligen Zinke 3 mittels eines Gelenkbolzens 11 angelenkt. Ein Ansatz 13, der sich vom Arm 9 an der Übergangsstelle zu einem Eingriffsteil 15 der Zinke 3 auskragend weg erstreckt, bildet eine Anlenkstelle 17 für das eine Ende einer Druckfeder 19, deren anderes Ende an einer Anlenkstelle 21 mit dem oberhalb der Traverse 5 befindlichen Bereich der Lagerwangen 7 verbunden ist. Dadurch ist die Zinke 3 in der in Fig. 1 und 2 dargestellten, der unbelasteten Länge der Druckfeder 19 entsprechenden Arbeitsposition gehalten. Beim Auftreten einer Überlast, die zu einem Schwenkmoment der Zinke 3 um den Gelenkbolzen 11 führt, das die Haltekraft der Druckfeder 19 übersteigt, führt die Zinke 3 eine Ausgleichsbewegung in Form einer Schwenkbewegung aus.

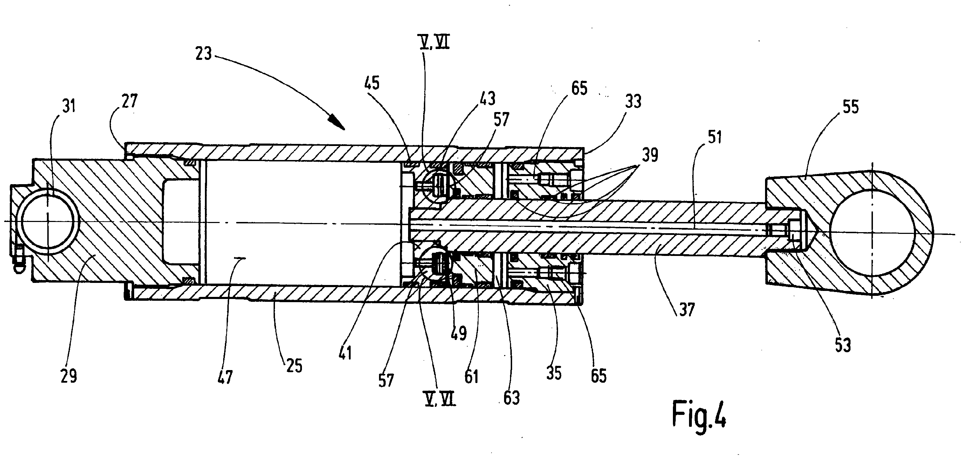

Die Fig. 3 zeigt in einer der Fig. 2 entsprechenden Darstellung eine Sicherungsvorrichtung gemäß einem Ausführungsbeispiel der Erfindung, wobei die Erzeugung der Haltekraft für die jeweilige bewegbare Komponente, wie beim gezeigten Beispiel einer jeweiligen Zinke 3, nicht durch eine Federvorspannung, sondern durch ein Druckmittelgetriebe erfolgt, das beim hier zu beschreibenden Ausführungsbeispiel einen Kolbenspeicher 23 aufweist. Der beim vorliegenden Beispiel benutzte Kolbenspeicher 23 ist in Fig. 4 gesondert dargestellt.

Der dargestellte Kolbenspeicher 23 weist ein kreiszylindrisches Speichergehäuse 25 auf, das am in Fig. 4 linksgelegenen Ende 27 durch einen eingeschraubten Verschlusskörper 29 dicht verschlossen ist, an dem sich eine Anlenkstelle 31 befindet, an der der Kolbenspeicher 23 mit der bewegbaren Komponente, beim vorliegenden Beispiel mit dem Arm 13 (Fig. 3) der Zinke 3 an der Anlenkstelle 17 verbindbar ist. Am anderen Ende 33 ist das Speichergehäuse 25 durch einen Gewindeeinsatz 35 geschlossen, durch den eine Kolbenstange 37 verfahrbar hindurchgeführt ist, wobei in üblicher Weise Dicht- und Führungsmittel 39 vorgesehen sind. Das innere Ende der Kolbenstange 37 ist mit einem Kolben 41 verbunden, der mit einer ebenfalls dem Stand der Technik entsprechenden Kolbendichtung 43 und einer Führungsleiste 45 versehen im Speichergehäuse 25 verfahrbar geführt ist. Der Kolben 41 trennt dabei innerhalb des Speichergehäuses 25 einen ersten Ausgleichsraum 47 von einem zweiten Ausgleichsraum 49, der bei der in Fig. 4 gezeigten Position, bei der der Kolben 41 die vollständig ausgefahrene Endlage einnimmt, das kleinste Volumen besitzt, während der erste Ausgleichsraum 47 dabei das größte Volumen hat.

Bei dem vorliegenden Beispiel mit dem durch einen Kolbenspeicher 23 gebildeten Druckmittelgetriebe ist der Kolbenspeicher 23 für die Erzeugung der das jeweilige Bearbeitungswerkzeug in der Arbeitsposition haltenden Haltekraft in der Art einer Gasfeder ausgebildet. Für die Befüllung mit unter einem entsprechenden Arbeitsdruck stehendem Arbeitsgas weist die Kolbenstange 37 einen koaxialen, inneren Kanal 51 auf, der am inneren Ende der Kolbenstange 37 in den ersten Ausgleichsraum 47 mündet und am äußeren Ende der Kolbenstange 37 mit einem Füll- und Entleeranschluss 53 verbunden ist. An dem den Anschluss 53 aufweisenden Ende der Kolbenstange 37 ist auch ein Verbindungskörper 55 angeschraubt, der eine Anlenkstelle für die Verbindung mit dem zugehörigen Bearbeitungsgerät bildet, beim Beispiel mit der Anlenkstelle 21 an den Lagerwangen 7, s. Fig. 3.

Für die Funktion als eine Linearkraft erzeugende Gasfeder ist im Kolben 41 für das Arbeitsgas, wie Luft, ein Durchgang vorgesehen. Bei Verfahrbewegungen des Kolbens 41 ist dadurch ein Volumenausgleich zwischen den Räumen 47 und 49 ermöglicht, wobei das Einfahren des Kolbens 41 aus der in Fig. 4 gezeigten, voll ausgefahrenen Position gegen die Linearkraft erfolgt, die aus dem Unterschied der wirksamen Kolbenflächen des Kolbens 41 auf der Stangenseite und der gegenüberliegenden Kolbenseite sowie dem in den Räumen 47 und 49 befindlichen Gasdruck resultiert.

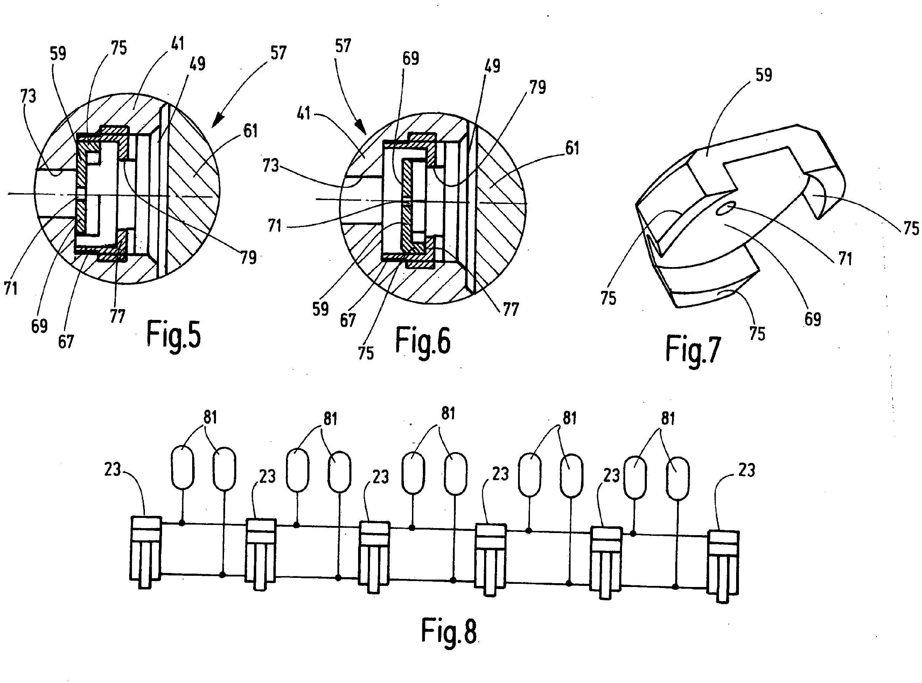

Um bei dem hier vorgesehenen Einsatz des Kolbenspeichers 23 zur Erzeugung der Haltekraft der Sicherungsvorrichtung ein verhältnismäßig ungehemmtes Einfahren der Kolbenstange 37 aus der in Fig. 4 gezeigten Endlage zu ermöglichen, gleichzeitig jedoch für das Ausfahren der Kolbenstange 37 eine Dämpfung zu realisieren, sind im Kolben 41 für den Gasdurchgang zwei Wechselventile 57 vorgesehen, die in Fig. 5 und 6 vergrößert dargestellt sind und je nach Stellung ihres Ventilkörpers 59, wie nachstehend näher erläutert wird, bei Einfahrbewegung und Ausfahrbewegung einen im Wesentlichen ungedrosselten oder einen gedrosselten Fluiddurchgang zwischen den Räumen 47, 49 bilden. Bei der in Fig. 4 gezeigten, voll ausgefahrenen Stellung des Kolbens 41 liegt dieser mit seiner Stangenseite an einem im Speichergehäuse 25 bewegbaren Dämpfungsglied 61 an, das außenseitig gegenüber dem Speichergehäuse 25 und innenseitig gegenüber der Kolbenstange 37 abgedichtet ist. Die vom Kolben 41 abgekehrte Seite des Dämpfungsglieds 61 grenzt an einen Dämpfungsraum 63 an, in dem sich ein Dämpferelement, im vorliegenden Fall eine Fettfüllung, befindet. Die Fettfüllung ist über im Gewindeeinsatz 35 befindliche, verschließbare Füllkanäle 65 einbringbar.

Die in Fig. 5 und 6 näher dargestellten Wechselventile 57 entsprechen prinzipiell dem aus DE 103 37 744 B3 bekannten Wechselventil und weisen ein Ventilgehäuse 67 auf, in dem der in Fig. 7 gesondert dargestellte Ventilkörper 59 frei beweglich ist. Der Ventilkörper 59 weist eine Schließplatte 69 auf, in der sich eine Drosselbohrung 71 befindet. Bei dem in Fig. 5 gezeigten Zustand des Ausfahrens des Kolbens 41, wobei die Gasströmung zum Volumenausgleich von rechts nach links strömt, liegt die Ventilplatte 69 des Ventilkörpers 59 am Rand einer in den Raum 47 mündenden Bohrung 73 in Schließstellung an, so dass für den Gasdurchgang nur die Drosselbohrung 71 zur Verfügung steht. Andererseits liegt der Ventilkörper 59 bei der Einfahrbewegung mit von links nach rechts in der Zeichnung verlaufender Gasströmung mit seitlichen Stegen 75, die sich vom Rand der Schließplatte 69 weg erstrecken, am Rand 77 eines zentralen Durchgangs 79 des Ventilgehäuses 67 an. Dadurch ist bei der Einfahrbewegung ein praktisch ungedrosselter Durchgang vom ersten Ausgleichsraum 47 durch die Bohrung 73 und über die Zwischenräume zwischen den Stegen 75 zum zweiten Ausgleichsraum 49 hin freigegeben, so dass die Einfahrbewegung des Kolbens 41 bei schnellem Volumenausgleich zwischen den Räumen 47 und 49 ungedämpft erfolgt.

Die Fig. 8 zeigt die Verschaltung einer Mehrzahl von Kolbenspeichern 23 für eine entsprechende Anzahl von Sicherungsvorrichtungen zugehöriger Werkzeuge, wobei eine Reihenschaltung gebildet ist. Wie Fig. 8 zeigt, sind für jeden Kolbenspeicher 23 mit dem einen Ausgleichsraum 47 und dem anderen Ausgleichsraum 49 verbundene Druckspeicher 81 vorgesehen, so dass für die Gasvorspannung ein entsprechend großes Gas-Vorratsvolumen zur Verfügung steht, durch das etwaige Leckageverluste, die bei der Verrohrung und Verschlauchung auftreten können, über längere Betriebszeiträume hinweg, ausgleichbar sind. Um eine Dichtungsbeschädigung am jeweiligen Kolbenspeicher 23 durch im Betrieb möglicherweise auftretende Querkräfte zu vermeiden, können bei Bedarf Gelenkaugen an den Anlenkstellen 17, 21 zwischen Kolbenspeicher 23 und Werkzeug 3 vorgesehen sein.

## Patentansprüche

1. Sicherungsvorrichtung für mindestens eine bewegbare Komponente (3) gegen Überlast, insbesondere in Form eines Werkzeuges bei Anbau- und Bodenbearbeitungsgeräten (1), wobei zur Erzeugung einer die jeweilige Komponente (3) in der Arbeitsposition positionierenden Haltekraft mindestens ein Druckmittelgetriebe (23) vorhanden ist, bei dem mittels einer Ventileinrichtung (57) ein Druckfluid, vorzugsweise in Form eines Arbeitsgases, wie Luft, zwischen zwei voneinander separierten Ausgleichsräumen (47, 49) mit sich ändernden Volumina für eine Ausgleichsbewegung der jeweiligen Komponente (3) aus ihrer Arbeitsposition bei Überlast schnell und für die Rückstellung dieser Komponente (3) in ihre jeweilige Arbeitsposition langsam strömt, **dadurch gekennzeichnet, dass** das Druckmittelgetriebe als Kolbenspeicher (23) ausgebildet ist, der mittels eines an einer Kolbenstange (37) angelenkten Kolbens (41) die beiden Ausgleichsräume (47, 49) voneinander separiert; und dass die Ventileinrichtung mindestens ein Wechselventil (57) im Kolben (41) aufweist, das im Kolbenboden mindestens eine Drosselstelle (71) für das langsame Strömen und einzelne Führungsstege (75) aufweist, die zwischen sich Öffnungsquerschnitte für ein rasches Strömen des Druckfluids freilassen.

2. Sicherungsvorrichtung nach Anspruch 1, **dadurch gekennzeichnet, dass** diametral zur Längsachse der Kolbenstange (37) einander gegenüberliegend zwei Wechselventile (57) als Ventileinrichtung im Kolben (41) angeordnet sind.

3. Sicherungsvorrichtung nach Anspruch 1 oder 2, **dadurch gekennzeichnet, dass** zumindest einer (47) der Ausgleichsräume (47, 49) mit einem Füll- und Entleeranschluss (53) permanent fluidführend verbunden ist, der vorzugsweise durch die Kolbenstange (37) hindurchgeführt ist, um dergestalt die Auslösekraft für die Überlastsicherung einzustellen.

4. Sicherungsvorrichtung nach einem der vorstehenden Ansprüche, **dadurch gekennzeichnet, dass** bei einer Bewegung des Kolbens (41) in seine ausgefahrene Endlagenstellung sich dieser an einem innerhalb eines Speichergehäuses (25) des Kolbenspeichers (23) angeordneten Dämpfungsglied (61) abstützt, das sich wiederum mit seiner gegenüberliegenden Seite an einem Dämpfungsfluid (63), wie Fett, an legt.

5. Sicherungsvorrichtung nach einem der vorstehenden Ansprüche, **dadurch gekennzeichnet, dass** das Speichergehäuse (25) und die Kolbenstange (37) des Kolbenspeichers (23) über jeweils eine Anlenkstelle (17, 21) zum einen bewegbar mit dem Anbau- oder Bodenbearbeitungsgerät (1) und zum anderen mit der bewegbaren Komponente (3), respektive in umgekehrter Anordnung, verbunden sind.

6. Sicherungsvorrichtung nach einem der vorstehenden Ansprüche, **dadurch gekennzeichnet, dass** die bewegbare Komponente aus einem Zinken (3) oder einer Schare besteht.

7. Sicherungsvorrichtung nach einem der vorstehenden Ansprüche, **dadurch gekennzeichnet, dass** eine Vielzahl von bewegbaren, vor Überlast zu sichernden Komponenten (3) vorhanden ist und dass jeder Komponente (3) ein Druckmittelgetriebe (23) zugeordnet ist.

## Claims

1. Safety device for at least one movable component (3) to prevent overloading, particularly in the form of a tool for attachments and soil cultivation apparatus (1), wherein at least one pressurised fluid transmission (23) is provided to generate a retaining force to position the respective component (3) in the operating position, with which transmission, by means of a valve apparatus (57), a pressurised fluid, preferably in the form of a working gas, such as air, flows quickly between two compensating chambers (47, 49), which are separated from one another, with varying volumes to achieve a compensating movement of the respective components (3) from their operating position in the event of overloading and flows slowly to reset these components (3) in their respective operating position, **characterised in that** the pressurised fluid transmission (23) is designed as a piston accumulator (23), which separates the two compensating chambers (47, 49) from one another by means of a piston (41) articulated on a piston rod (37); and **in that** the valve apparatus comprises at least one shuttle valve (57) in the piston (41), said valve comprising, at the bottom of the piston, at least one throttle point (71) to ensure a slow flow and individual guide webs (75) that between them release opening cross-sections to allow a rapid flow of the pressurised fluid.

2. Safety device according to claim 1, **characterised in that** two shuttle valves (57) lying diametrically opposite one another with respect to the longitudinal axis of the piston rod (37) are arranged in the piston (41) as a valve apparatus.

3. Safety device according to either claim 1 or claim 2, **characterised in that** at least one (47) of the compensating chambers (47, 49) is connected in a permanent fluid-conveying manner to a filling and draining port (53), which is preferably passed through by the piston rod (37) in order to adjust the release force for the overload safety device in this manner.

4. Safety device according to any of the preceding claims, **characterised in that**, during a movement of the piston (41) into its extended end position, said piston is supported on a damping element (61) arranged inside an accumulator housing (25) of the piston accumulator (23), said damping element in turn being in contact with a damping fluid (63), such as grease, with its opposite side.

5. Safety device according to any of the preceding claims, **characterised in that** the accumulator housing (25) and the piston rod (37) of the piston accumulator (23) are each connected by means of an articulation point (17, 21), in one case in a movable manner to the attachments or soil cultivation apparatus (1) and in the other case to the movable component (3), or in the opposite configuration respectively.

6. Safety device according to any of the preceding claims, **characterised in that** the movable component consists of a prong (3) or a ploughshare.

7. Safety device according to any of the preceding claims, **characterised in that** a plurality of movable components (3) to be protected against overloading are provided and **in that** each component (3) is assigned to a pressurised fluid transmission (23).

## Revendications

1. Dispositif de sécurisation vis-à-vis d'une surcharge d'au moins un composant (3) mobile, en particulier sous la forme d'un outil dans des appareils (1) portés et des appareils (1) de traitement du sol, dans lequel pour la production d'une force de maintien mettant le composant (3) respectif en position dans la position de travail, il y a au moins un mécanisme (23) à fluide sous pression, dans lequel, au moyen d'un dispositif (57) de soupape, un fluide sous pression, de préférence sous la forme d'un gaz de travail, comme de l'air, s'écoule entre deux espaces (47, 49) de compensation séparés l'un de l'autre ayant des volumes, qui se modifient, pour un mouvement de compensation du composant (3) respectif rapidement de sa position de travail en cas de surcharge et lentement pour le retour de ce composant (3) dans sa position de travail respective,
**caractérisé**
**en ce que** le mécanisme à fluide sous pression est constitué sous la forme d'un accumulateur (23) à piston, qui, au moyen d'un piston (41) articulé à une tige (37) de piston, sépare les deux espaces (47, 49) de compensation l'un de l'autre, et **en ce que** le dispositif de soupape a au moins, dans le piston (41), une soupape (57) à deux voies, qui a, dans le fond du piston, au moins un point (71) d'étranglement pour l'écoulement lent et diverses entretoises (75) de guidage, qui laissent libres entre elles des sections transversales d'ouverture pour un écoulement rapide du fluide sous pression.

2. Dispositif de sécurisation suivant la revendication 1, **caractérisé en ce que** deux soupapes (57) à deux voies sont disposées comme dispositif de soupape dans le piston (41) en étant opposées l'une à l'autre diamétralement par rapport à l'axe longitudinal de la tige (37) du piston.

3. Dispositif de sécurisation suivant la revendication 1 ou 2, **caractérisé en ce qu'**au moins l'un (47) des espaces (47, 49) de compensation communique fluidiquement de manière permanente avec un raccord (53) de remplissage et de vidange, qui, de préférence, passe dans la tige (37) du piston, pour régler ainsi la force de déclenchement de la sécurisation vis-à-vis d'une surcharge.

4. Dispositif de sécurisation suivant l'une des revendications précédentes, **caractérisé en ce que**, lorsque le piston (41) vient dans sa position de fin de course sorti, celui-ci s'appuie sur un élément (61) d'amortissement, qui est disposé à l'intérieur d'une enveloppe (25) de l'accumulateur (23) à piston et qui s'applique à son tour par son côté opposé à un fluide (63) d'amortissement, comme de la graisse.

5. Dispositif de sécurisation suivant l'une des revendications précédentes, **caractérisé en ce que** l'enveloppe (25) de l'accumulateur et la tige (37) du piston de l'accumulateur (23) à piston sont reliées par respectivement un point (17, 21) d'articulation d'une part de manière mobile avec l'appareil (1) porté ou avec l'appareil (1) de traitement du sol et d'autre part avec le composant (3), respectivement en agencement inversé.

6. Dispositif de sécurisation suivant l'une des revendications précédentes, **caractérisé en ce que** le composant mobile est constitué d'une dent (3) d'étrille ou d'un socle.

7. Dispositif de sécurisation suivant l'une des revendications précédentes, **caractérisé en ce qu'**il y a une pluralité de composants (3) mobiles à sécuriser vis-à-vis d'une surcharge, et **en ce qu'**un mécanisme (23) à fluide sous pression est affecté à chaque composant (3).
